Europäisches Patentamt

European Patent Office

Office européen des brevets

(11) Numéro de publication: **0 354 854**
**A2**

(12) **DEMANDE DE BREVET EUROPEEN**

(21) Numéro de dépôt: **89402277.1**

(22) Date de dépôt: **11.08.89**

(51) Int. Cl.5: **B 60 P 7/08**

(30) Priorité: **12.08.88 DE 8810229**

(43) Date de publication de la demande:
**14.02.90 Bulletin 90/07**

(84) Etats contractants désignés:
**BE DE ES FR GB IT LU NL SE**

(71) Demandeur: **S.E.S.R. - SOCIETE EUROPEENNE DE
SEMI-REMORQUES
44, rue François 1er
F-75008 Paris (FR)**

(72) Inventeur: **Franz Carl
Kiebitzweg 7
DE-5600 Wuppertal 1 (DE)**

(74) Mandataire: **Kügele, Bernhard et al
NOVAPAT FRANCE 63 bis, boulevard Bessières
F-75017 Paris (FR)**

(54) **Profilé d'écartement.**

㉚ La présente invention concerne un profilé d'écartement, en particulier pour fixer une charge sur la surface de chargement d'un véhicule automobile. Un profilé d'angle de ragage (3,103,203) comportant un épaulement intérieur (10,110,210) sur son aile verticale (7,107,207)

Fig. 1

EP 0 354 854 A2

**Description**

## Profilé d'écartement

L'invention concerne un profilé d'écartement, en particulier pour la fixation d'une charge sur la surface de chargement d'un véhicule automobile.

Pour fixer une charge, par exemple des caisses ou des boîtes, et en particulier des palettes de dimensions normalisées, ainsi que pour adapter la dimension du passage intérieur en cas de dimensions intérieures trop larges de la surface de chargement, on sait placer des bandes de bois servant de pièces d'écartement entre la charge et les parois latérales de la carrosserie du véhicule automobile. L'adaptation à la largeur de passage intérieure du véhicule est alors surtout nécessaire du fait qu'une augmentation admissible de la largeur extérieure du véhicule est nécessaire dans le cas de véhicules pour palettes réfrigérés, du fait qu'en effet les palettes normalisées adaptées à la largeur des véhicules classiques ne remplissent pas complètement la largeur intérieure plus importante de la surface de chargement qui est disponible dans ces véhicules spéciaux.

Pour ateindre un refroidissement parfait d'une charge surgelée ou de denrées fraîches, il est en outre nécessaire que la charge n'ait aucun contact direct avec la paroi de la carrosserie. Du fait également que les charges à refroidir sont de plus en plus transportées sur des palettes dans des transporteurs réfrigérés, les palettes doivent par conséquent être disposées sur la surface de chargement, en étant à distance des parois latérales de la carrosserie. L'air refroidi peut alors s'écouler dans l'interstice étroit subsistant entre les parois latérales et les palettes et la charge peut être maintenu à la température prédéterminée. L'air de refroidissement expulsé par une machine frigorifique du véhicule automobile s'écoule alors sur la surface des palettes et, du fait d'une surpression et d'une aspiration frontale par le plancher, revenir de manière forcée vers la machine frigorifique, sur le plancher, entre les parois latérales et le chargement, par l'interstice. C'est pourquoi les bandes de bois introduites pour conserver cet interstice sont toutefois désavantageuses lors de la fixation de la charge, parce que, pour empêcher un décalage pendant le chargement, elles son introduites après chargement; la charge ne peut en effet pas être empilée de manière suffisamment sûre et avec une précision de position sur des bandes de bois décalées pour pouvoir résister par exemple aux efforts d'accélération survenant pendant le transport, en particulier en direction transversale.

L'invention a pour but de créer un profilé d'écartement évitant les inconvénients évoqués.

Selon l'invention, ce problème est résolu par le fait qu'un profilé d'angle de ragage est pourvu, sur son aile verticale, d'un épaulement intérieur présentant une surface inclinée. La surface inclinée devrait de préférence être fortement saillante. Un tel profilé d'angle de ragage , se composant le cas échéant de plusieurs longueurs partielles placées bout-à-bout peut être fixé à chaque paroi latérale, en fonction de la longueur de la surface de chargement et est placée avec son aile horizontale située sur la surface de chargement, c'est-à-dire que les épaulements intérieurs des profils d'angle de ragage sont situés les uns en face des autres et définissent la largeur de passage de la surface de chargement. Selon la largeur de l'épaulement intérieur ou selon la pente et l'extension de l'épaulement intérieur ou de la surface inclinée qui se transforme à son arête libre en une surface d'appui verticale, l'écartement entre les profils d'angle de ragage opposés et ainsi la largeur de passage peuvent varier. Les épaulements intérieurs veillent en tous cas à créer un interstice suffisant entre la charge et les parois de la carrosserie, de façon que, dans le cas de véhicules réfrigérés, la circulation d'air de refroidissement nécessaire soit garantie. Les épaulements intérieurs ou leurs surfaces inclinées servent en outre de surfaces de glissement vers le centre du véhicule, surfaces sur lesquelles glissent en particulier toujours les palettes vers une surface de pose prédéterminée. Dans le cas d'accélérations transverales, les palettes sont de cette manière constamment fixées pendant le transport; tout décalage latéral est empêché.

L'aile verticale du profilé d'angle de ragage peut présenter une saillie d'encliquetage au-dessus de l'épaulement intérieur, et l'aile horizontale du profilé de ragage peut être avantgeusement pourvue intérieurement d'un évidement. Au lieu d'un évidement, on peut également réaliser le profilé de ragage de façon qu'une longueur partielle, s'étendant de manière inclinée, de l'aile horizontale et l'aile verticale fassent entre elles un angle aigu. Dans les deux cas, une bande présentant l'épaulement intérieur peut être reliée au profilé d'angle de ragage

On peut par exemple engager la bande introduite à l'aide d'un pied dans l'évidement, avec une pièce de tête, dans le cliquet de l'aile verticale; les palettes empilées sur la surface de chargement reposent sous leur poids propre sur le pied de la bande, de sorte qu'aucun décalage de la bande ne peut se produire, même pendant le transport. D'autre part, on peut toutefois également introduire une pièce de pied conique de la bande dans l'espace libre conique situé entre l'aile verticale et la partie s'étendant de manière inclinée de l'aile horizontale et encliqueter la pièce de tête sur la saillie de l'aile verticale; tout décalage latéral de la bande est également exclu ici. Les bandes peuvent par exemple être acrochées dans les profilés d'angle de ragage ou y être vissées à force, à l'aide de vis.

Les bandes, qui sont rigidement reliées aux profils d'angle de ragage , au moins pendant le transport, ne peuvent pratiquement pas être prises à la main. En vue de les stocker, elles peuvent être logées en nombre et en dimension quelconque, par exemple sous le toit du véhicule, dans un étui ou tout autre espace d'arrimage, ou par exemple être également stockées devant la paroi frontale, en travers, à l'intérieur du véhicule.

L'invention est expliquée ci-desous plus en détail à l'aide d'exemples de réalisation représentés sur le dessin, dans lequel :

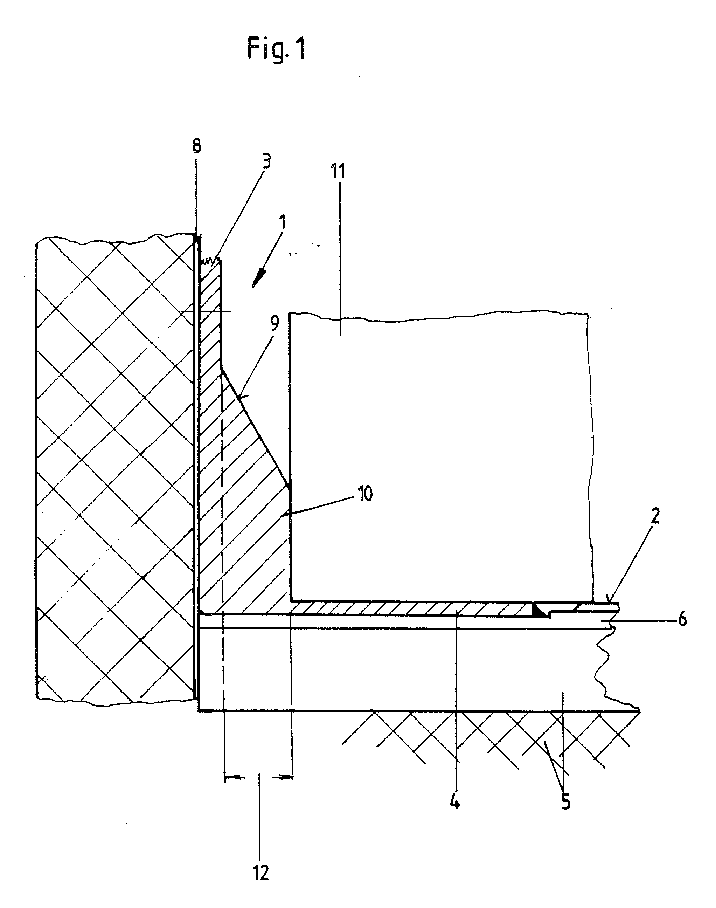

La figure 1 représente un profilé d'écartement disposé dans la transition entre le plancher et et la paroi latérale d'une carrosserie de véhicule automobile;

la figure 2 représente une vue selon la figure 1, avec un autre profilé d'écartement et

la figure 3 représente une vue selon la figure 1, avec un autre profilé d'écartement.

Le profilé d'écartement 1 s'étend le long des deux faces longitudinales de la surface de chargement 2 d'un véhicule automobile, non représenté en détail. Le profilé d'écartement 1 se compose d'un profilé d'angle de ragage 3 qui repose, par son aile horizontale 4, sur la plaque de plancher 5,6, et qui est fixé , par son aile verticale 7, sur la paroi latérale 8 de la carrosserie du véhicule, en y étant par exemple collée, soudée ou vissée. Le profilé de ragage d'angle 3 est pourvu, sur son aile verticale 7, d'un épaulement intérieur 10 présentant une surface inclinée 9. L'épaulement intérieur 10 veille à ce que les palettes 11 empilées sur la surface de chargement respectent un écartement suffisant par rapport aux surfaces intérieures des parois latérales 8, ce qui garanti en particulier une circulation de l'air de refroidissement dans le cas de véhicules à palettes réfrigérés et permet, selon la largeur 12 de l'épaulement 10, une adaptation de la valeur du passage intérieur de la surface de chargement, c'est-à-dire de la distance entre les parois latérales 8, à la largeur des palettes 11 empilées les unes à côté des autres.

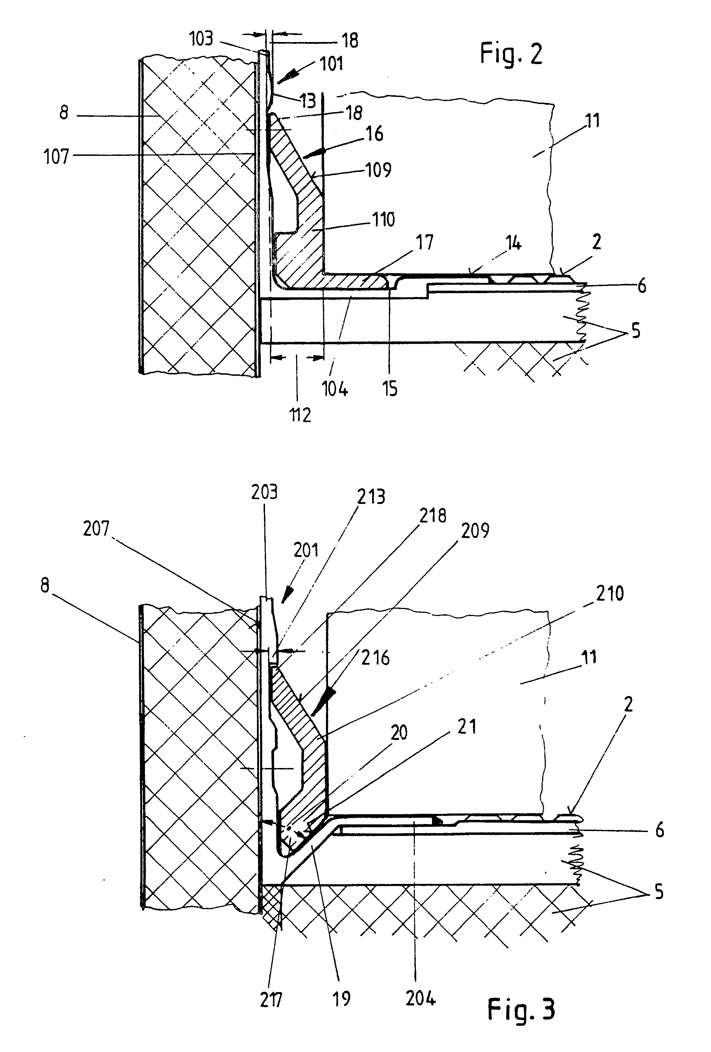

Dans le profilé d'écartement 101 selon la figure 2, l'aile verticale 107 du profilé d'angle de raguage 103 au-dessus de l'épaulement intérieur 110 est pourvu d'une saillie d'encliquetage 13 sortant vers l'intérieur et présente en outre un évidement 15 à l'intérieur, c'est-à-dire de la surface 14 tournée vers les palettes 11. L'épaulement 110 se compose ici d'une bande 16 qui s'engage d'une part, par un pied 17, dans un évidement 15, et d'autre part, par une pièce de tête 18, située au-dessous de la saillie d'encliquetage 13, dans la cornière de ragage 103; la bande 16 et le profilé d'angle 103 sont ainsi reliés entre eux de manière intime, de sorte qu'on peut complètement renoncer, le cas échéant, à une liaison supplémentaire démontable, telle que par exemple une liaison vissée. En effet, la bande 16 fixée entre la saillie d'encliquetage 13 et l'évidement 15 ne peut pas se décaler, du fait que les palettes 11 pèsent sur le pied 17 par l'effet de leur poids propre.

A l'aide de bandes 16 s'encliquetant dans les profilés d'angle de ragage 103 il est possible d'effectuer une adaptation à la largeur effective de la charge, définie par les palettes 11 placées les unes à côté des autres, à la valeur qui est par contre plus grande de la largeur du passage intérieur de la surface de chargement, par simple suppression de l'encliquetage d'une bande 16 et échange contre une bande dont l'épaulement intérieur 110 présente une plus grande largeur 112 correspondante.

Dans le profilé d'écartement 201 selon la figure 2, une longueur partielle 19 de l'aile horizontale 204 est reliée, de façon à ce qu'il y ait un angle aigu 20 entre les ailes 207,204. Une bande 216 à relier au profilé d'angle de ragage 203 comporte un pied 217 présentant une rampe 21 et s'engageant à force dans l'espace libre existant, défini par l'angle aigu 20, entre les ailes 204 ou 19 et 207 du profilé d'angle de ragage 203. La pièce de tête 218 de la bande 216 s'appuie contre la saillie d'encliquetage 213, de sorte que la bande 216 est reliée au profilé d'angle de ragage 203 du profilé d'écartement 201.

**Revendications**

1. Profilé d'écartement, en particulier pour fixer une charge sur la surface de chargement d'un véhicule automobile, caractérisé par un profilé d'angle de ragage (3,103,203) comportant un épaulement intérieur (10,10,210) sur son aile verticale (7,107,207).

2. Profilé d'écartement selon la revendication 1, caractérisé en ce qu'une surface inclinée (9,109,209) est pourvue d'un épaulement intérieur (10,10,210).

3. Profilé d'écartement selon la revendication 1 ou 2, caractérisé en ce que l'aile verticale (107,207) présente, au-dessus de l'épaulement intérieur (110,210), une saillie d'encliquetage (13,213).

4. Profilé d'écartement selon une ou plusieurs des revendications 1 à 3, caractérisé en ce que l'aile horizontale (104) de la cornière de ragage (103) est pourvue intérieurement d'un évidement (15).

5. Profilé d'écartement selon une ou plusieurs des revendications 1 à 4, caractérisé en ce qu'une longueur partielle (19), s'étendant de manière inclinée, de l'aile horizontale (204) et l'aile verticale (207) font entre elles un angle aigu (20).

6. Profilé d'écartement selon une ou plusieurs des revendications 1 à 5, caractérisé en ce qu'une bande (16,216) formant l'épaulement intérieur (10,210), est reliée à la cornière de ragage (103,203).

# Fig. 1

EP 0 354 854 A2

Fig. 2

Fig. 3